(19) Europäisches Patentamt
European Patent Office
Office européen des brevets

(11) **EP 4 030 376 A1**

(12) **EUROPEAN PATENT APPLICATION**

(43) Date of publication:
**20.07.2022 Bulletin 2022/29**

(21) Application number: **21151957.4**

(22) Date of filing: **16.01.2021**

(51) International Patent Classification (IPC):
**G06Q 50/30** $^{(2012.01)}$    **G08G 1/01** $^{(2006.01)}$
**G08G 1/052** $^{(2006.01)}$    **G08G 1/00** $^{(2006.01)}$

(52) Cooperative Patent Classification (CPC):
**G08G 1/012; G06Q 10/06; G06Q 50/30;
G08G 1/0129; G08G 1/0133; G08G 1/052;
G08G 1/202**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Bayerische Motoren Werke Aktiengesellschaft**
**80809 München (DE)**
• **Technische Universität München**
**80333 München (DE)**

(72) Inventors:
• **Bilali, Aledia**
**81925 Munich (DE)**
• **Fastenrath, Ulrich**
**85399 Hallbergmoos (DE)**
• **Koller-Matschke, Irina**
**85521 Ottobrunn (DE)**
• **Bogenberger, Klaus**
**83703 Gmund (DE)**

(74) Representative: **Legl, Stefan**
**LLM IP Patentanwaltskanzlei**
**Hofmannstrasse 60**
**81379 München (DE)**

(54) **METHOD FOR DETERMINING AN IMPACT OF RIDE POOLING ON A TRAFFIC SITUATION**

(57) Ride pooling services are a customer-centric mode of transportation and environmentally friendly due to expected positive impacts regarding traffic congestion. A proposed analytical model can estimate traffic impacts of ride pooling on a city by using a shareability model and a macroscopic fundamental diagram for the network of consideration. Moreover, the analytical model presented investigates the impact that improving the average velocity of a city has on further increasing the percentage of shared trips in the operation area. The model can output the network's average velocity. For example, the average velocity in a city can be increased by up to 20% for the scenario when all the private vehicle trips are substituted with pooled vehicle trips. Operators and cities can use proposed concepts to quickly estimate traffic impacts of introducing a ride pooling service in a certain area and for a certain set of service quality parameters.

Fig. 6

**EP 4 030 376 A1**

**Description**

**Field**

Examples relate to a method for determining an impact of a ride pooling service on a traffic situation within a defined traffic area. Further examples relate to a machine readable medium comprising instructions executable by a processor, and to a system with a processor and a memory comprising said instruction.

**Background**

Private vehicles can enable a comfortable mode of transportation where every user can have the advantage of high flexibility and privacy when travelling. However, the available space on public roads is limited and as a consequence motorized individual traffic with cars can result in an increased number of traffic jams which may in return reduce the possible advantages of using private vehicles.

Generally, cities are experiencing growth in population every year, which contributes to increased traffic demand in the city area. The use of the private vehicles - even though convenient - can be seen as not sustainable, considering the large amount of parking space and street capacity that is required due to an average occupancy of only 1.3 passenger per vehicle, for example. From the other side, traditional public transportation typically is an efficient and environmentally friendly mode of transportation, however, it may not be very attractive for customers due to the lack of convenience and flexibility as a result of fixed line and schedule and a limited area of coverage.

The extended availability of smartphones and data accessibility have made possible the emergence of ride pooling services. These services offer a user-centric and more sustainable mobility option for the customer, which can reduce the vehicle kilometers travelled in the system due to sharing of trips with similar trajectories. However, an effective ride pooling service depends largely on the customers' readiness to use it, which is affected by individual choices and on the attributes of the service. The service attributes, which can be called service quality parameters, which affect customers the most are e.g. travel time, waiting time and service cost, for example, and the lower they are, the higher is generally the attractiveness of the service.

From the operators' perspective, the percentage of shared trips in an area influences the efficiency of the service, and therefore plays an important role in deciding whether to offer a pooling service in an area or not. Shareability, the percentage of trips which can be shared in a city (which can e.g. be seen as a measure of probability that a shared trip can be offered by the ride pooling service, in a city) e.g. can be determined via simulations by using the concept of shareability networks. In order to generalize the calculation of shareability for different cities, a mathematical model can be used, in which shareability depends on city parameters (e.g. average speed and surface of the operating area) and service attributes (e.g. detour time), for example.

Currently available models for determining an influence of ride pooling on the traffic situation in a city may not be accurate enough to enable well-founded insights regarding the effects of introducing ride pooling in a certain traffic area. Further, using agent-based models for simulations may be computationally intensive so that it may become difficult to get results for larger traffic areas. For example, computation times may be very long for complex traffic scenarios.

**Summary**

There may be a desire for improved concepts to determine the impact of ride pooling services on a traffic situation in a defined traffic area faster and more accurately.

This desire is addressed by the subject-matter of the independent claims. Further examples of the proposed concepts are described in the dependent claims, the following description and in combination with the figures.

Embodiments of the present disclosure are based on a method for determining an impact of a ride pooling service on a traffic situation within a defined traffic area. The method comprises providing a Macroscopic Fundamental Diagram (MFD) of the defined traffic area. The Macroscopic Fundamental Diagram defines a relation between an average flow of traffic (e.g. vehicles per hour) and an average velocity of traffic (e.g. average velocity of all considered trips) within the defined traffic area.

The method further comprises determining a network's average velocity within the defined traffic area based on the Macroscopic Fundamental Diagram and a percentage of trips that can be shared in the defined traffic area. The considered defined traffic area can be represented by a network model, for example. The network's average velocity thus may represent the average velocity of the traffic within the considered network of the defined traffic area. Further, the determined network's average velocity is output as a result of the proposed method.

In contrast to other methods for analysing the impact of ride pooling on a traffic situation, the proposed concept enables to determine the impact of ride pooling on the average velocity of the traffic in the analysed network. Other concepts use a static value for the average velocity when analysing impacts of ride pooling, for example. In the proposed concept, however, the parameter of average velocity can be considered as a dynamic parameter which may improve the accuracy of analysing the effects of using ride pooling in the defined traffic area, for example.

According to an aspect of the disclosure, the method may further comprise deriving the percentage of trips that can be shared in the defined traffic area by using at least one service quality parameter of the ride pooling service. The at least one service quality parameter can be a maximum detour time, a maximum waiting time, a maximum boarding time, and/or a reservation time, for example. The method enables to choose a set of service quality parameters, for example, to select a setting for a ride pooling service. According to the chosen setting and depending on the considered traffic area, it is possible to determine the percentage of trips that can be shared, e.g. the number of shared trips that can be provided by the ride pooling service in relation to the number of all trips including private trips. A less demanding setting for the service quality parameters may result in an increased value of shareability, which represents the probability to find a matching trip in the network to share a ride, for example. An advantage of the proposed concept thus can be the possibility to easily adapt the analysis to a certain set of service quality parameters, for example.

According to an aspect, it is proposed to use an analytical model for determining the network's average velocity. In contrast to other methods which use agent based simulations, using the analytical model may enable shorter calculation times and thus faster results of the network's analysis.

For example, a modified shareability model may be used in the analytical model. Other shareability models do not consider the impact of varied average velocity, for example. However, with an increase of average velocity in the network, e.g. the defined traffic area, the probability to find shareable trips may also increase for a constant set of service quality parameters. For example, when the average velocity of traffic is higher, the chances may be higher to be able to provide ride pooling for a defined maximum waiting time in contrast to lower average velocity (where the defined maximum waiting time might be exceeded due to longer travelling times, or where the maximum detour time might not be sufficient for a detour due to a slower travelling speed, for example). For example, a dynamic variation of the network's average velocity depending on a number of shared trips within the defined traffic area may be considered in the modified shareability model. The modified shareability model may enable to show the result of altered network's average velocity and thus e.g. may enable a more accurate analysis of the impact of ride pooling in the defined traffic area.

For example, the used modified shareability model may further consider a passenger trip generation rate and attributes of the defined traffic area. The defined traffic area may be a city, for example, and attributes of the defined traffic area may be a surface area of the city and/or a total length of the network of the city, for example. For example, the proposed concept can capture analytically the traffic impact that ride pooling has on average velocity and the improvement that it may additionally cause to urban environment due to the additional increase of shareable trips. This implies that traffic improvement due to ride pooling may also be beneficial to increase the chances to find shareable trips as a result of further distances reached within the allowed detour time due to higher velocity, for example. As a consequence, the passenger generation rate may vary, e.g. more pooled passenger trips may be possible instead of alone passenger trips, which may be considered in the used modified shareability model.

As already mentioned, using the modified shareability model may enable to consider an impact of varying network's average velocity on the shareability. Accordingly, the method may further comprise outputting this impact of a variation of the network's average velocity on the shareability of the ride pooling service. This may make it possible to analyse more accurately the possible effects of offering ride pooling service in the considered traffic area.

For example, it may be possible to derive a relation of the network's average velocity and a trip generation rate analytically. The network's average velocity may be expressed in two different forms depending on a state of the network, e.g. free flow state or congested state. The network's average velocity may depend on a value of alone passenger trips generated in an hour and performed by private vehicles, and a value of pooled passenger trips requests generated in an hour and performed by pooling services, for example. The network's average velocity may further depend on a shareability value, the total network's length and the length of vehicle trips within the network, for example. For example, the analytical relation between network's average velocity and trip generation rate may be derived by using the Macroscopic Fundamental Diagram and a traffic density of the network.

According to an aspect, the Macroscopic Fundamental Diagram may be expressed analytically. For example, it may be possible to use curve fitting to provide the Macroscopic Fundamental Diagram as a parabolic function. There may be different possibilities to derive the Macroscopic Fundamental Diagram itself to be able to provide curve fitting. For example, the Macroscopic Fundamental Diagram may be derived via simulations, e.g. the simulation may provide a certain number of data points and curve fitting may be used to derive a parabolic function approximating the data points. For example, the Macroscopic Fundamental Diagram may be derived via empirical data of the network or the traffic area respectively. For example, the Macroscopic Fundamental Diagram may be derived purely analytically. Basically, the method of curve fitting may be applied to simulated or empirical data where curve fitting would be necessary to derive the analytical parabolic function, whereas for the case of deriving the Macroscopic Fundamental Diagram analytically no curve fitting is necessary as the analytical function may be already available.

According to an aspect, outputting the determined average velocity may comprise outputting a relative value of an average velocity depending on a percentage of shared trips and/or a pooling penetration rate compared to an average velocity in a scenario with no shared trips. As an advantage it may be possible to easily see the variation of the network's average velocity depending on the share of ride pooling trips in the traffic area. Alternatively or additionally, outputting the determined average velocity may comprise outputting an absolute value of an average velocity depending on a percentage of shared trips. This may enable to directly represent the impact of ride pooling on the absolute network's average velocity. For example, the impact of ride pooling with different share compared to the overall traffic may be directly representable.

For example, the determined average velocity may be output depending on a day time. This may give the possibility to directly see, at what times offering a ride pooling service may be useful or more efficient, e.g. compared to other times. For example, at certain day times (e.g. rush hour), the streets in the defined traffic area may be congested, which may result in an increased impact of ride pooling on the traffic, especially on the network's average velocity.

Embodiments of the present disclosure further provide a computer program product comprising a computer readable medium having computer readable program code embodied therein, the computer readable program code being configured to implement one of the above methods, when being loaded on a computer, a processor, or a programmable hardware component.

Accordingly, an aspect of the present disclosure relates to a system for operating a ride pooling service comprising one or more processors and a memory (e.g. computer program product) coupled to the one or more processors and comprising instructions executable by the one or more processors to implement a method as described above or below.

## Brief description of the Figures

Some examples of apparatuses and/or methods will be described in the following by way of example only, and with reference to the accompanying figures, in which

Fig. 1   shows a flow chart of a method for determining an impact of a ride pooling service on a traffic situation;
Fig. 2   shows a loop diagram illustrating an impact of variable average velocity on the shareability in a network;
Fig. 3   shows a Macroscopic Fundamental Diagram MFD of a network of a specific city;
Fig. 4   shows the impact of integrating a dynamic velocity value in the modified shareability model;
Fig. 5   shows a variation of average velocity in an exemplary network depending on the day time and the penetration rate;
Fig. 6   illustrates an improvement of average velocity for different penetration rates compared to a base scenario with only private vehicle trips; and
Fig. 7   shows an example of a system comprising a memory with instructions executable on a processor.

## Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Same or like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled via one or more intervening elements. If two elements A and B are combined using an "or", this is to be understood to disclose all possible combinations, i.e. only A, only B as well as A and B, if not explicitly or implicitly defined otherwise. An alternative wording for the same combinations is "at least one of A and B" or "A and/or B". The same applies, mutatis mutandis, for combinations of more than two Elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

Other methods are known which use models that derive the value of shareability without considering the traffic impact of ride pooling. Therefore, the average velocity, a commonly used measure of traffic efficiency, is assumed to be constant in space and time in these models. However, by introducing a ride pooling service in a city, the number of vehicles on the roads may decrease thereby increasing the average velocity in the network. As the velocity is in turn an input for the shareability model, the percentage of shared trips in an area may increase even further. This effect may be noted as second order effect of velocity on shareability for a synthetic grid network. In the present disclosure, an aspect is to explore the concept of this second order effect for a real city network (e.g. network describing a traffic area) and to provide a more realistic analytical model capturing traffic effects of ride pooling.

Benefits of ride pooling, focusing on a particular city have been investigated a lot by researchers. Other studies or models, however, investigate only the impact from the pooled vehicle fleet and indirectly check the traffic impacts by calculating the saved vehicle kilometers in the system, without examining the interaction with the other vehicles that are present in the network. Other studies are performed using agent-based simulations, which even though providing a good estimation of the saved vehicle kilometers in the system are specific for a particular city and require a large amount of input data. Therefore, a generalization for different city types, e.g. other traffic areas, is difficult. Albeit the traffic impacts of ride pooling are not directly investigated in other studies (like for instance would be the case if the agent-based simulation would be coupled with a microscopic traffic simulation), the computational time needed for these simulations may be very high and rises with increasing problem size. Therefore, it is difficult to simulate high demand pooling states and it is even more difficult and time demanding to investigate the direct traffic impact by integrating the agent-based simulation and microscopic traffic simulation for the pooling case.

To overcome the drawbacks of using agent-based simulations and to be able to estimate quickly the impact of ride pooling with only little input data, for example, the present disclosure presents methods to derive analytically the traffic impacts of ride pooling services, for example. A main requirement is the existence of a macroscopic fundamental diagram for a specific city. Additionally, the influence that the improvement of average velocity in the city has on shareability is also modeled.

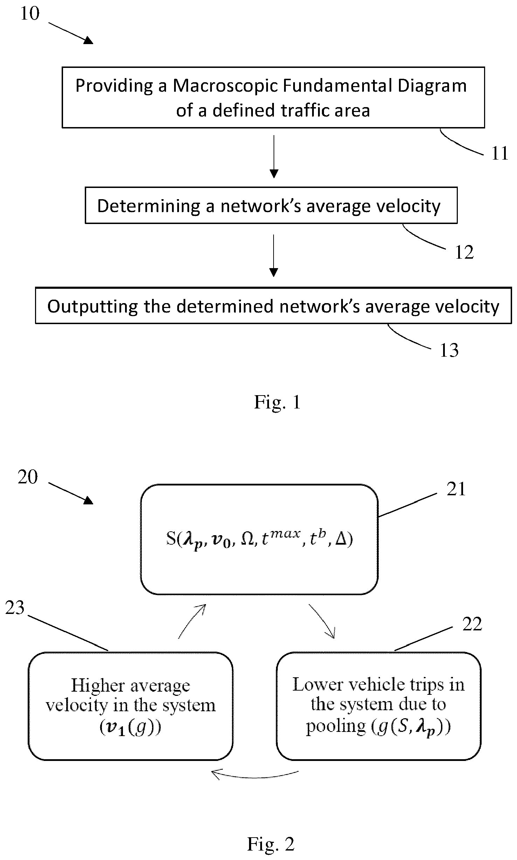

Figs. 1 accordingly shows a flow chart of a method 10 for determining an impact of a ride pooling service on a traffic situation within a defined traffic area. The method 10 comprises providing 11 a Macroscopic Fundamental Diagram MFD of the defined traffic area and determining 12 a network's average velocity within the defined traffic area based on the Macroscopic Fundamental Diagram MFD and a percentage of trips that can be shared in the defined traffic area. Further, the method 10 comprises outputting 13 the determined network's average velocity.

The output network's average velocity may enable more accurate analysis of the impact of a ride pooling service on the traffic in the defined traffic area, for example. Further, the method may particularly make use of an analytical model to enable faster and easier computation of the network's average velocity. The method 10 may make use of an analytical model to enable lower computational requirements, for example.

More details and aspects of the concept are mentioned in connection with the proposed concept or one or more examples described above or below (e.g. Fig. 2 to 7). The concept may comprise one or more additional optional features corresponding to one or more aspects of the proposed concept or one or more examples described above or below.

An example of a model allowing the analysis of traffic impacts of ride pooling is proposed in the following. Firstly, an introduction to the shareability model is given, followed by a model for the reduction of vehicle trips in the road network due to shared trips. Subsequently, the relation between average velocity and vehicle trip generation and the modified shareability model are described.

Shareability Model: The benefits of ride pooling are reliant on the possibility to share trips which have similar trajectories. The percentage of trips which can be shared in an area is called shareability Sand differs based on city parameters, service quality parameters and the used optimization objective. The well-known general formula defining shareability Sis depending on a dimensionless quantity $L_{sq}^{on}$. This dimensionless quantity $L_{sq}^{on}$ depends on the pooled passenger trip generation rate per hour $\lambda_p$, city attributes (e.g. velocity $v$ and surface area $\Omega$) and service quality attributes (e.g. temporal deviation from the direct route or detour time $\Delta$, maximum waiting time the passenger waits to be picked-up $t_{max}$ and boarding/disembarking time $t_b$).

The calculation of shareability S may be based on the notion of the shareability shadow, which defines the geometric shape of where in space the origins and destinations of a trip should be in order to be shareable with an already existing trip, without violating the time constraints (defined by service quality parameters). Depending on the relation that service quality parameters have with each other, there are two different shapes of the shareability shadow and hence two forms of $L_{sq}^{on}$, depending on the relation of picked-up time $t_{max}$, detour time $\Delta$, and boarding/disembarking

time $t_b$. These two forms are known to the skilled person.

The mentioned equations determine the value of shareability when the optimization objective in the customer matching problem is to maximize the percentage of trips which may be shared. However, using the objective of maximizing the percentage of shared trips, does not necessarily mean that the distance travelled is minimized. In order to maximize the percentage of shared trips, the pooling algorithm might decide about sharing of the trips (when the time constraints allow it), just for the sake of achieving maximum percentage of shared trips, even though it might be more effective in terms of saved vehicle kilometers to serve the customers one after the other. As the optimization objective to minimize vehicle kilometers travelled may be more favorable to improve the traffic conditions, it may be the one selected for the proposed concepts within the present disclosure.

The shareability for this optimization objective is given by the following equation:

$$S_{n,k}(L_{sq}^{on}(v,\Delta,t^b,t^{max})) = \frac{k\, L_{sq}^{on^n}}{\left(1 + k\, L_{sq}^{on^n}\right)}$$

In this equation, n and k parameters are specified by fitting simulated shareability data to the given form of equation. This form of equation also describes statistically the natural combinatorial effects of particle bonding processes in biochemistry.

This shareability model returns the percentage of shared passenger trips in an area, while assuming that the average velocity in the city $v=v_0$ remains constants. However, for a certain pooled passenger trip generation $\lambda_p$, the number of total vehicle trips in the system $g$ is reduced based on the percentage of trips that are shareable (S). And as for a lower number of vehicles in the system, the average velocity in the system may get higher, one may encounter a change in average velocity to from $v_0$ to $v_1$, which should be reflected in the shareability model and additionally increase the shareability value (e.g. $S_{modified}$).

Fig. 2 correspondingly shows a loop diagram 20. The above described interactions are described by the loop diagram 20. A first state 21 relates to the shareability S depending on the pooled passenger trip generation $\lambda_p$ and the velocity $v_0$. A second state 22 relates to the impact of a higher value of trip generation $\lambda_p$, which leads to a lower value of total vehicle trips in the system $g$. As the number of vehicle trips may influence the average velocity of the analyzed system, the average velocity may alter depending on the number of total vehicle trips in the system $g$, for example. Consequently, a third state 23 relates to an altered average velocity $v_1$ which may influence the value of shareability $S$ of the first state 21 of the loop. For example, higher average velocity may lead to a higher value of shareability $S$. Hence, the analytical model developed in this study considers the synergetic effects that increased pooling rate and average network velocity have on each other. In the following sections, the reduced number of vehicle trips in the system due to ride pooling will be defined, followed by the description of an analytical model that relates average velocity with the vehicle trips generated in the city.

Vehicle Trip Reduction Model: One may distinguish between passenger trips generation rate $\lambda$, for trips requested by the customers, and vehicle trips generation rate $g$, for vehicle trips occurring in the street, which can serve more than one customer simultaneously. For simplicity, it may be assumed that private vehicle trips may be replaced by pooled vehicle trips. However, as the implementation of ride pooling in a city may be gradual, there may be passengers who may still use their private vehicles to travel alone and there may also be passengers who may use the ride pooling service. Therefore, one may divide the total passenger trips generated in the area $\lambda$ in alone passenger trips $\lambda_a$ and pooled passenger trips $\lambda_p$. The number of alone vehicle trips generated in the system $g_a$ may be the same as the number of alone passenger trips $\lambda_a$ ($g_a = \lambda_a$), as there is only one person per each vehicle. As the pooled passenger trips $\lambda_p$ can be shared with each other, the number of pooled vehicle trips generated in the system $g_p$, depends on the percentage of shared trips in the operating area (shareability) S and the capacity of the vehicles $\Phi$. This indicates that for a shareability value higher than zero, the pooled vehicle trips $g_p$ may be lower than the pooled passenger trips $\lambda_p$, as there can be more than one passenger served simultaneously by vehicles. This equation can give a lower bound for the reduction of pooled vehicle trips, as it does not consider the empty pick-up trips or the reallocation trips and assumes that all the passenger trips which are shared have the same origin and destination. Hence, the total number of vehicle trips in the system $g$ includes the alone vehicle trips $g_a$ and the pooled vehicle trips $g_p$ and is given by the following equation.

$$g = g_a + g_p = \lambda_a + \left(\lambda_p(1-S) + \frac{S\lambda_p}{\Phi}\right)$$

This reduction in total vehicle trips in the system may improve traffic conditions in the city by improving the average velocity.

More details and aspects of the concept presented in Fig. 2 are mentioned in connection with the proposed concept or one or more examples described above or below (e.g. Fig. 1 or 3-7). The concept may comprise one or more additional optional features corresponding to one or more aspects of the proposed concept or one or more examples described above or below.

Analytical Relation of Average Velocity and Vehicle Trip Generation: As previously mentioned, reducing the number of vehicles in the system may affect the average velocity in the city. In this section, an analytical model is presented to capture the relation of average velocity and vehicle trip generation by exploiting the benefits of macroscopic fundamental diagram. Therefore, it is possible to analytically derive the improvement on average velocity coming as a result of the reduction of vehicle trips in urban areas due to ride pooling.

Macroscopic Fundamental Diagram: Macroscopic fundamental diagram (MFD) (or network fundamental diagram) defines the functional form of the relation between average velocity, traffic flow $q$ (vehicles/hour) and traffic density $k$ (vehicles/kilometer). The relation between these parameters, defined by the MFD, was firstly developed for motorway segments. It was discovered that a similar relation exists also for urban networks. A functional form of the MFD for urban areas, relating travel production (vehicle-meters) with accumulation (vehicles) is known to the skilled person. The MFD can be developed for different urban areas by using detector or floating car data or analytically. MFD can also be exploited in ride hailing studies, which do not consider ride pooling, as a background in dynamic modeling of urban traffic modeling in order to develop a revenue maximization platform and it can also be used as a means for dynamic modeling and control of a network taxi dispatch system.

The functional form of MFD is used in the present disclosure as a basis for defining the relation between average velocity and vehicle trip generation in a network. The MFD may be derived by means of simulations. For each time interval i, it is possible to get the average velocity $v_{ei}$ and flow $q_{ei}$ for each edge in the network and to define the weighted average velocity and flow in the network using the following equations, where $le$ is the length of each edge $e$:

$$v^i = \frac{\sum_{e \in E} v_e^i * l_e}{\sum_{e \in E} l_e} \qquad q^i = \frac{\sum_{e \in E} q_e^i * l_e}{\sum_{e \in E} l_e}$$

As the relation of flow and velocity resembles a parabola, in order to connect these two parameters analytically, it is possible to define a parabolic function in the form given by the following equation, where the vertex of the parabola is $V(q_c, v_c)$, $v_c$ and $q_c$ are velocity and flow when the network is at capacity and $a$ is a parameter which can be defined by fitting the data points to this function.

$$(v - v_c)^2 = 4 * (a) * (q - q_c)$$

Analytical Vehicle Trips in a Network based on MFD: A simple method to define the traffic density of a network analytically is described. It may be assumed that a ride pooling service may be operated in an area defined by a boundary. Within this area (e.g. defined traffic area), there are three different types of trips to be considered: (1) the ones that have the origin and destination within the area, (2) the ones that have the origin in the area and the destination outside, (3) the ones that have the destination in the area and the origin outside and (4) the trips that have both origins and destination outside the operation area, but pass through it. The first type of trips includes the alone vehicle trips and the potential pooled vehicle trips. The second and the third type of trips are the ones that comprise what may be called here as a background traffic in the network as they are going to be there regardless of the impact of the ride pooling service in vehicle trip reduction, as the impact that might come from parking in the boundary of the area of service and continuing the trip with ride pooling service may be neglected. In order to define the traffic density within the boundaries of this area it is possible to consider only the contribution of vehicle trips type (1), (2) and (3) and leave out the contribution from type (4) as most of the cities have a highway belt to reduce the transit traffic within the city

Traffic density is defined as the number or vehicles per lane kilometer in the system. According to Little's law the average number of vehicles in the system is equal to the average time the vehicles spend in the system multiplied by the average number of vehicles generated. If one considers only the vehicles of type (1), which have both the origin and the destination within the area of operation, the traffic density $k_{od}$ depends on $g_{od}$ which is the average number of vehicles generated inside the area (denoted by $g$ in the Vehicle Trip Reduction Model section), $l_{od}$ which is the average vehicle trip length, $v$ which is the average velocity in the network and L which is the total network length.

For vehicle trips of type (2) and (3), which have only their origin or destination within the area, the background density $k_b$ depends on $go$ ($g_d$) which is the average number of vehicles generated which have only the origin (destination) inside the area, and $lo$ ($l_d$) which is the average vehicle trip length for this vehicle type. As the vehicle trips of this type are only partly inside in the area, po and $p_d$ give the percentage of the vehicle trip length type (1) and (2) respectively, that is within the area of operation.

The overall network's traffic density is the sum of the traffic density of vehicle trips type (1), (2) and (3), as illustrated in the following equation.

$$k = k_{od} + k_b = \frac{g_{od}\frac{l_{od}}{v} + g_o\frac{p_o l_o}{v} + g_d\frac{p_d l_d}{v}}{L}$$

From the MFD relation, it is possible to substitute $q = vk$ and to derive analytically traffic flow q and consequently, also the relation of flow and vehicle trips generated inside the network ($g_{od}$) by the following formulation, defining the flow q:

$$q = \frac{g_{od}l_{od} + g_o p_o l_o + g_d p_d l_d}{L}$$

From this formulation for $g_{od}$ it is possible to derive the generated number or vehicle trips type (1), which have both the origin and destination in the operated area $g_{od}$ (as these are the ones of interested for the ride pooling service) by the following equation:

$$g_{od} = \frac{qL - (g_o p_o l_o + g_d p_d l_d)}{l_{od}}$$

By substituting q in the equation of the MFD, one can get the relation of average velocity and vehicle trips generated inside the network ($g_{od}$) given by the following equation, from which it is possible to get two values, depending on which state the network is: free flow state or congested state:

$$(v - v_c)^2 = 4 * (a) * \left(\frac{g_{od}l_{od} + g_o p_o l_o + g_d p_d l_d}{L} - q_c\right)$$

$$= 4 * (a) * \left(\frac{(\lambda_a + \left(\lambda_p(1-S) + \frac{S\lambda_p}{\Phi}\right))l_{od} + g_o p_o l_o + g_d p_d l_d}{L} - q_c\right)$$

In this way, as an example, one can derive the new average velocity in the network, only by having knowledge of the MFD and the reduced number of vehicle trips due to pooling, calculated by equation for the total number of vehicle trips in the system $g$ when shareability value is known.

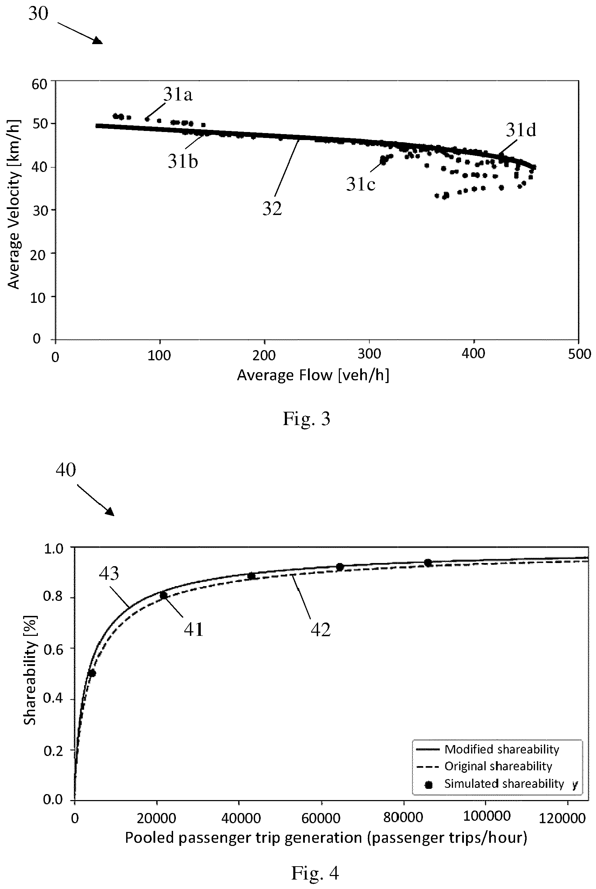

Fig. 3 shows an example 30 of a Macroscopic Fundamental Diagram of a network of a specific city, e.g. the MFD for the operating area in the specific city. Data points 31a-31d to construct this MFD were extracted from the results of three scenarios with different demand levels. The virtual queues of the vehicles waiting to get in the network are kept at minimum to avoid a potential network gridlock, which might happen when the input flow exceeds the supply function. For example, it is generally possible to derive the functional form of the MFD analytically or use a simulation setup to determine the data points 31a-31d.

The x-axes correspond to the value of average traffic flow and the y-axes corresponds to average velocity. It is shown that the area of consideration from the city network is at the free flow state most of the time, while reaching the unstable state at the network's capacity during the peak times. The high average velocity values come as a result of a large area considered, which contains city-highways and arterials, where the speed limit is high, for example. A clockwise hysteresis loop is observed for the investigated scenarios caused when the demand starts decreasing after the peak time, showing that the system does not return to the free flow state immediately if the initial congestion level in the network is high. At the point where the traffic flow is at maximum at the MFD graph, the network is in its optimum state and one can derive the network's traffic flow at capacity $q_c$. The corresponding velocity is the network's velocity at capacity $v_c$. The values of traffic flow and velocity at capacity e.g. may be equal to 39.2 km/h and 457 vehicles/h, respectively, for the example 30 of the specific city network.

In order to get a functional form for this MFD, it is possible to use the equation of parabola specified in the previous equation. As the majority of the data points belong to the free flow state and a presented base scenario has data points only in this state, it is possible to fit the data to the parabolic function, where the vertex of the parabola is defined by the point where the network is at capacity $V(q_c, v_c)$. The parameter $a$ of the parabolic function is found to be 0.62. The fitted curve is shown by the solid line 32 in Fig. 3.

More details and aspects of the concept presented in Fig. 3 are mentioned in connection with the proposed concept or one or more examples described above or below (e.g. Fig. 1-2 or 4-7). The concept may comprise one or more additional optional features corresponding to one or more aspects of the proposed concept or one or more examples described above or below.

Modified Shareability Model: By capturing the impact that ride pooling has on improving average velocity in the network, it is possible to capture the additional impact that the change in average velocity has on the shareability value. Therefore, the following describes the modified shareability model, where different from previous concepts, velocity is considered as a dynamic parameter.

In order to define the modified shareability value one can substitute the dynamic velocity formulation, which depends on shareability, given in the previous equation to the known shareability equations. Hence, the modified $L^{on}_{sq\,mod}$ can be formulated in two different forms, depending on the relation of pick-up time $t_{max}$, detour time $\Delta$, and boarding/disembarking time $t_b$. Substituting $L^{on}_{sq\,mod}$ in the equation for shareability S, one can get a non-linear equation of shareability and it is possible to use the Newton-Raphsod iterative method, for example, to solve it:

$$F(S) = S - 1 + \frac{1}{2(L^{on}_{sq\,mod})^3}\left(1 - e^{-L^{on}_{sq\,mod}}\right)\left(1 - \left(1 + 2L^{on}_{sq\,mod}\right)e^{-2L^{on}_{sq\,mod}}\right) = 0$$

The model described in this section can capture analytically the traffic impact that ride pooling has on average velocity and the improvement that it may additionally cause to our urban environment due to the additional increase of shareable trips. This implies that traffic improvement due to ride pooling may also be beneficial to increase the chances to find shareable trips as a result of further distances reached within the allowed detour time due to higher velocity, for example.

It can be shown that when private vehicle trips are substituted with ride pooling, the traffic congestion is expected to improve (e.g. less congestion) and therefore the velocity may increase depending on pooled passenger demand, which may affect the shareability value. In other concepts, the velocity is considered as a constant parameter for the shareability model. Using the presented non-linear equation of shareability, however, it is possible to integrate a dynamic velocity into the shareability model.

Fig. 4 shows an example 40 of a result of integrating a dynamic velocity value in the shareability model. A dotted curve 42 (Original shareability) shows the shareability curve for an original shareability model (e.g. according to another model) using the constant average velocity for a base scenario $vo$ and a solid curve 43 (Modified shareability) shows the modified shareability curve for a dynamic velocity. The difference between the two curves in the presented example 40 is not very big as the average velocity was already rather high in the base scenario (e.g. $vo$=39.2 km/h) and its improvement was limited, however, one can still see an improvement of the shareability values when the velocity increases, suggesting that this might increase additionally the chances to find shareable trips and thus the average velocity in the city. The black data points 41 (Simulated shareability) in Fig. 4 are the calculated shareability values considering the improvement in average velocity for simulated scenarios with penetration rate of ride pooling service p equal to 5%, 25%, 50%, 75% and 100%. A very good correlation with the modified shareability model is shown for all of them, validating in this way the result of the proposed analytical model. For traffic areas, e.g. cities with high congestion, the likelihood to find shareable trips may further increase (resulting in increased shareability value), due to higher possibility for improvement in average velocity.

More details and aspects of the concept presented in Fig. 4 are mentioned in connection with the proposed concept or one or more examples described above or below (e.g. Fig. 1-3 or 5-7). The concept may comprise one or more additional optional features corresponding to one or more aspects of the proposed concept or one or more examples described above or below.

Traffic Impacts of Ride Pooling: In order to investigate the traffic impacts of ride pooling service, various scenarios are provided in an example, where the penetration rate of ride pooling service $p$ ranges from 5% to 100%, and change a modeled number of private vehicle trips and of pooled vehicle trips accordingly in the calculation.

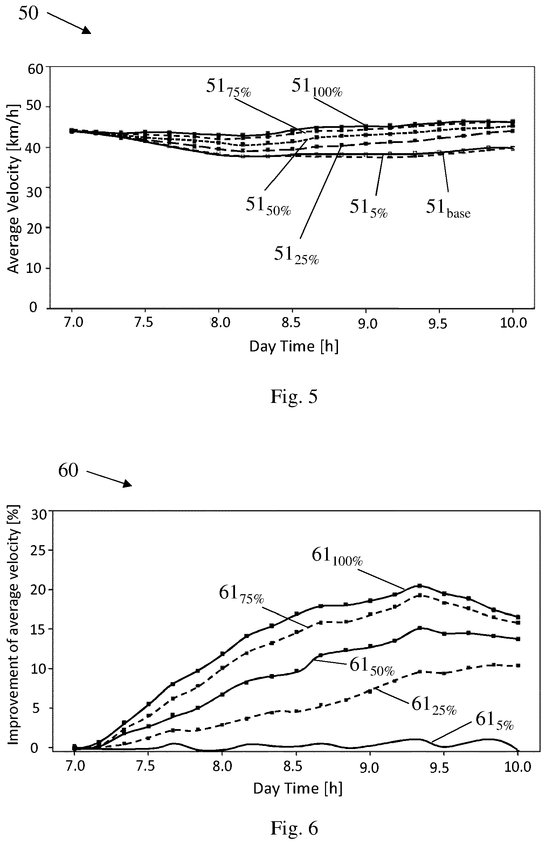

Fig. 5 shows the variation of average velocity in an exemplary network depending on the day time and the penetration rate (e.g. percentage of requested pooled/shared trips in relation to all trips percentage of shared trips; e.g. the actual percentage of shared trips depend on the shareability value). Fig. 5 depicts the average velocity every 10 minutes for the morning peak hour for different penetration rates of ride pooling. Diagram 50 shows corresponding graphs for the different scenarios. A first graph $51_{base}$ shows the average velocity for the case that no trips are shared, i.e. the penetration rate of ride pooling service $p=\lambda_p/\lambda$ is 0%. In other words, the base scenario is the one where $p=0\%$, meaning that all the vehicle trips in the system are not shared and performed by private vehicles. Further graphs $51_{5\%}$, $51_{25\%}$ $51_{50\%}$ $51_{75\%}$, and $51_{100\%}$ relate to the cases where the penetration rate is 5%, 25%, 50%, 75% and 100%, respectively. For $p=50\%$, the half of the vehicle trips are shared trips, and for $p=100\%$, all the private vehicle trips in the system are substituted by ride pooling vehicle trips. It is observed that at the beginning of the morning peak, when the network is not in congested state even for the base scenario there is no significant improvement of average velocity in the network for all the scenarios tested. When the network starts to get congested (e.g. in the rush hour) and the average velocity starts decreasing, the benefits of pooling become noticeable. This emphasizes the advantage of pooling in improving traffic condition especially during peak times and shows that one can see higher benefits of pooling in cities with high levels of congestion.

It is shown that the higher the penetration rate of pooling, the higher is the increase in average velocity. This comes as a result of high demand for pooling, which increases the chances to find shareable trips (shareability). Hence, as more trips are shared, fewer vehicles are present in the road network and higher velocities are observed. The example of Fig. 5 shows, that the proposed concept comprising outputting the average velocity within the network, e.g. the defined traffic area, may be helpful to increase the efficiency of ride pooling as the ride pooling service may be applied more efficiently due to the more accurate knowledge of the impact on average velocity which can be provided by use of proposed concepts.

More details and aspects of the concept presented in Fig. 5 are mentioned in connection with the proposed concept or one or more examples described above or below (e.g. Fig. 1-4 or 6-7). The concept may comprise one or more additional optional features corresponding to one or more aspects of the proposed concept or one or more examples described above or below.

Fig. 6 illustrates the improvement of average velocity compared to the base scenario and shows that when the penetration rate of pooling is 100% the velocity can increase by up to 20% compared to the base scenario. Diagram 60 shows corresponding graphs for the different scenarios calculated for an exemplary network, e.g. the network of the specific city mentioned above. A first graph $61_{5\%}$ shows the relative increase of the average velocity for a penetration rate of 5% in relation to the average velocity of the base scenario (where no trips are shared). Further graphs $61_{25\%}$, $61_{50\%}$, $61_{75\%}$, and $61_{100\%}$ relate to the cases where the penetration rate is 25%, 50%, 75% and 100%, respectively. For the scenario shown by the first graph $61_{5\%}$, when the penetration is 5%, the effect of ride pooling on average velocity is quite small, indicating that when this service will be introduced the effect on traffic is not expected to be seen immediately. However, with increasing market share, the positive impact of pooling will be more prominent. For instance, for the scenario shown by the second graph $61_{25\%}$, when the penetration rate of ride pooling is 25%, the average velocity rises by up to 10% compared to the base scenario. This suggests that ride pooling services have to gain a considerable market share in order to profit from their positive impacts on traffic congestion, for example.

Figs. 5 and 6 also illustrate that the effect of ride pooling on average velocity depends on the day time, which relates to the number of vehicles present in the considered network. For example, the impact on the network's average velocity is smaller before rush hour (e.g. 7h30am) than at rush hour (e.g. between 9h00 am and 10h00 am).

More details and aspects of the concept presented in Fig. 6 are mentioned in connection with the proposed concept or one or more examples described above or below (e.g. Fig. 1-5 or 7). The concept may comprise one or more additional optional features corresponding to one or more aspects of the proposed concept or one or more examples described above or below.

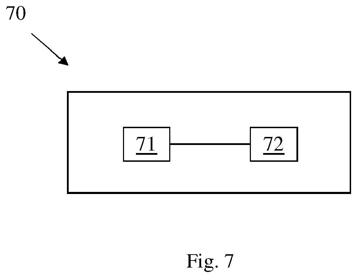

Fig. 7 shows an example of a system 70 for operating a ride pooling service. The system 70 comprises one or more processors 71 and a memory 72 coupled to the one or more processors 71 and comprising instructions executable by the one or more processors 71 to implement a method presented above or below.

More details and aspects of the concept presented in Fig. 7 are mentioned in connection with the proposed concept or one or more examples described above or below (e.g. Fig. 1-6). The concept may comprise one or more additional optional features corresponding to one or more aspects of the proposed concept or one or more examples described above or below.

The following paragraph gives a summary of the model parameters used within the present disclosure together with a short description. The following parameters are constant parameters: Surface area $\Omega$, i.e. Area of the operation; Network length $L$, i.e. Total length of the network; Velocity at capacity $v_c$ i.e. Average velocity when the network is at capacity; Flow at capacity $q_c$ i.e. Average flow when the network is at capacity; Average velocity for morning peak $v_o$ i.e. Initial average velocity for the morning peak for the base scenario; Parabola's parameter $a$, i.e. Parameter of the parabolic function found by data fitting; Average vehicle trip length with origin and destination in the area $l_{od}$ i.e. Average vehicle trip length that have the origin and destination in the area of operation; Average vehicle trip length with only origin in the area $l_o$ i.e. Average vehicle trip length that have only the origin in the area of operation; Average vehicle trip length with only destination in the area $l_d$ i.e. Average vehicle trip length that have only the destination in the area of operation; % of $l_o$ within the area of operation $p_o$ i.e. % of $l_o$ within the area of operation; % of $l_p$ within the area of operation $p_d$ i.e. % of $l_p$ within the area of operation; Detour time $\Delta$, i.e. Time delay caused due to detour; Maximum waiting time

$t_{max}$ i.e. Maximum time waiting to be picked-up; Boarding/disembarking time $t_b$ i.e. Time needed to board/disembark the vehicle; Vehicle capacity $\Phi$ i.e. Maximum $\Phi$ passengers can share the trip at the same time. The following parameters are variable parameters: Average velocity $v$, i.e. Average velocity in the network at a certain time of the day; Average flow $q$, i.e. Average flow in the network at a certain time of the day; Average density k, i.e. Average density in the network at a certain time of the day; Shareability $S$, i.e. % of trips which can be shared in a network; Ride pooling penetration rate $p$, i.e. Fraction of pooled passenger trips/total passenger trips ($p=\lambda_p/\lambda$); Alone passenger trip generation $\lambda_a$ i.e. Alone passenger trips generated in an hour and performed by private vehicles; Pooled passenger trip generation $\lambda_p$ i.e. Pooled passenger trips requests generated in an hour and performed by pooling service; Alone vehicle trip generation $g_a$ i.e. Alone vehicle trips generated in an hour by private vehicles; Pooled vehicle trip generation $g_p$ i.e. Pooled vehicle trips generated in an hour by pooling service; Total vehicle trip generation in the operation area $g_{od}$ or $g$, i.e. Total vehicle trips generated in an hour in the service area of pooling service; Vehicle trips generation with only origin in the area $g_o$ i.e. Vehicle trips generation that have only the origin in the area of operation; Vehicle trips generation with only destination in the area $g_d$ i.e. Vehicle trips generation that have only the destination in the area of operation.

An aspect of the present disclosure is to provide an analytical model to investigate the impact of ride pooling on traffic efficiency by using a shareability model and the macroscopic fundamental diagram MFD for a city, for example. A model is provided that captures the relation of average velocity and vehicle trip generation in a network, in order to analytically check the change in average velocity when pooling is introduced. Moreover, a modified shareability model is provided, which derives further benefits on shareability from an improved average velocity due to pooling. The proposed model was tested in different scenarios for a ride pooling service offered in a city, where private vehicle trips are substituted for different levels of ride pooling penetration rate ranging from 5% to 100% (i.e. when all the private vehicle trips are substituted by ride pooling vehicle trips, see e.g. Fig. 5 and 6). The results show that the analytical model provides a very good and fast estimation of the traffic impacts of ride pooling on urban environment requiring only a few input data and the existence of the MFD for a city, which allows for a generalization of a model to other cities, even without the need of network simulations and calibrations, in cases when MFD is derived analytically or via empirical data. The analytical model is e.g. beneficial to quickly assess the traffic impact of pooling in a certain area of service and for a certain set of service quality attributes. The provided insights may be used in order to assess the efficiency of introducing ride pooling services in different areas and e.g. to prioritize the operation of such a service, e.g. to achieve higher efficiency of the service.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for illustrative purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a signal", "means for generating a signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software, but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

**Claims**

1.  A method (10) for determining an impact of a ride pooling service on a traffic situation within a defined traffic area, the method comprising:

    providing (11) a Macroscopic Fundamental Diagram of the defined traffic area;
    determining (12) a network's average velocity within the defined traffic area based on the Macroscopic Fundamental Diagram and a percentage of trips that can be shared in the defined traffic area; and
    outputting (13) the determined network's average velocity.

2.  The method (10) according to claim 1, further comprising
    deriving the percentage of trips that can be shared in the defined traffic area by using at least one service quality parameter of the ride pooling service.

3.  The method (10) according to claim 2,
    wherein the at least one service quality parameter is at least one of a maximum detour time, a maximum waiting time, a maximum boarding time, or a reservation time.

4.  The method (10) according to one of claims 1 to 3,
    wherein an analytical model is used for determining (12) the network's average velocity.

5.  The method (10) according to claim 4,
    wherein a modified shareability model is used in the analytical model.

6.  The method (10) according to claim 5,
    wherein a dynamic variation of the network's average velocity depending on a number of shared trips within the defined traffic area is considered in the modified shareability model.

7.  The method (10) according to claim 5 or 6,
    wherein the used modified shareability model further considers passenger trip generation rate and attributes of the defined traffic area.

8.  The method (10) according to one of claims 5 to 7, further comprising
    outputting an impact of a variation of the network's average velocity on the shareability of the ride pooling service.

9. The method (10) according to one of the previous claims,
   wherein a relation of the network's average velocity and a trip generation rate is derived analytically.

10. The method (10) according to one of the previous claims,
    wherein the Macroscopic Fundamental Diagram is expressed analytically.

11. The method (10) according to one of the previous claims,
    wherein outputting (13) the determined average velocity comprises outputting a relative value of an average velocity depending on a percentage of shared trips compared to an average velocity in a scenario with no shared trips.

12. The method (10) according to one of the previous claims,
    wherein outputting (13) the determined average velocity comprises outputting an absolute value of an average velocity depending on a percentage of shared trips.

13. The method (10) according to one of the previous claims,
    wherein the determined average velocity is output (13) depending on a day time.

14. A machine readable medium (72) comprising instructions executable by one or more processors to implement the method (10) according to one of claims 1 to 13.

15. A system (70) for operating a ride pooling service, comprising:

    one or more processors (71); and
    a memory (72) coupled to the one or more processors (71) and comprising instructions executable by the one or more processors (71) to implement the method (10) according to any one of claims 1 to 13.

10

Providing a Macroscopic Fundamental Diagram
of a defined traffic area

11

Determining a network's average velocity

12

Outputting the determined network's average velocity

13

Fig. 1

20

21

$$S(\lambda_p, v_0, \Omega, t^{max}, t^b, \Delta)$$

23

22

Higher average
velocity in the system
$(v_1(g))$

Lower vehicle trips in
the system due to
pooling $(g(S, \lambda_p))$

Fig. 2

Fig. 3

Fig. 4

Fig. 5

Fig. 6

70

71 — 72

Fig. 7

Europäisches
Patentamt

European
Patent Office

Office européen
des brevets

# EUROPEAN SEARCH REPORT

Application Number

EP 21 15 1957

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BILALI ALEDIA ET AL: "An Analytical Model to Evaluate Traffic Impacts of On-Demand Ride Pooling", 2020 IEEE 23RD INTERNATIONAL CONFERENCE ON INTELLIGENT TRANSPORTATION SYSTEMS (ITSC), 20 September 2020 (2020-09-20), pages 1-6, XP055821815, DOI: 10.1109/ITSC45102.2020.9294287 ISBN: 978-1-7281-4149-7 * figures 1,2,4,6 * * page 1 - page 6 * ----- | 1-15 | INV. G06Q50/30 G08G1/01 G08G1/052 G08G1/00 |

TECHNICAL FIELDS
SEARCHED        (IPC)

G06Q
G08G

The present search report has been drawn up for all claims

| Place of search | Date of completion of the search | Examiner |
|---|---|---|
| The Hague | 7 July 2021 | Lamelas Polo, Yvan |

EPO FORM 1503 03.82 (P04C01)